# EUROPEAN PATENT SPECIFICATION

(11) **EP 4 600 540 B1**
(45) Date of publication and mention of the grant of the patent: **09.12.2026**
(21) Application number: 25155489.5
(22) Date of filing: 03.02.2025
(51) Int. Cl.: F16N 25/00, F01D 25/16, F01D 25/18, F16C 33/10, F16C 33/66

(54) **ALTERNATE LUBRICATION MECHANISMS FOR VEHICLE BEARINGS LUBRICANT DISPENSER**
ALTERNIERENDE SCHMIERMECHANISMEN FÜR EINEN SCHMIERMITTELSPENDER MIT FAHRZEUGLAGERN
MÉCANISMES DE LUBRIFICATION ALTERNATIFS POUR DISTRIBUTEUR DE LUBRIFIANT DE PALIERS DE VÉHICULE

(30) Priority: 06.02.2024 US 202418433567
(43) Date of publication of application: 13.08.2025
(73) Proprietor: RTX Corporation, Farmington, CT 06032 (US)
(72) Inventor: Nelson, Alexander Robert, Amston 06231 (US); Walker, Brady L., Glastonbury 06033 (US)
(74) Representative: Schmitt-Nilson Schraud Waibel Wohlfrom Patentanwälte Partnerschaft mbB

(56) References cited:
- CN-Y- 201 218 163
- US-A- 3 744 246
- US-A- 3 911 694
- US-A- 4 497 172
- US-A- 4 899 861

## Description

The present disclosure is directed to a lubrication system for bearings utilizing a pitot tube pressurized lubricant dispenser.

Some aircraft engines use fluid lubricated bearings. The lubricated bearings traditionally use lubrication systems which utilize pressurized oil and/or fuel that require parts such as supply/scavenge pumps, reservoirs, sumps, plumbing/pipes, and seals. These lubrication system components can account for up to 30% of overall propulsion system weight, volume, and cost in certain engines (e.g., small limited-life engines). US 4 497 172 A discloses a bearing chamber pressurization system for a ducted fan gas turbine engine to prevent oil escaping from bearing chambers, comprising a bearing compartment housing defining a bearing compartment housing interior having a bearing compartment housing interior surface and a bearing compartment housing exterior having a bearing compartment housing exterior surface; a shaft of the engine is supported by a bearing located within the bearing compartment housing. Relatively lower pressure air is provided by at least one pitot pickup. Disclosures in the field of supplying lubricant to a bearing are known from US 3 744 246 A, US 3 911 694 A, CN 201 218 163 Y, and US 4 899 861 A.

The invention is laid out in the subject-matter of the main claims. Advantageous embodiments are laid out in the dependent claims. In accordance with the present disclosure, there is provided a lubrication system comprising a bearing compartment housing defining a bearing compartment housing interior having a bearing compartment housing interior surface and a bearing compartment housing exterior having a bearing compartment housing exterior surface; a shaft supported by bearings located within the bearing compartment housing; a lubricant dispenser in operative communication with the bearing compartment housing interior, the lubricant dispenser configured to contain at least one lubricant, the at least one lubricant configured to be released onto the bearings; and a pitot tube fluidly coupled to the lubricant dispenser.

Particular embodiments further may include at least one, or a plurality of, the following optional features, alone or in combination with each other:

A further embodiment of any of the foregoing embodiments may additionally and/or alternatively include the lubricant dispenser comprises a lubricant reservoir in fluidly coupled with the pitot tube, the lubricant reservoir fluidly coupled with the bearing compartment housing interior; and at least one dispensing feature fluidly coupled to the lubricant reservoir.

A further embodiment of any of the foregoing embodiments may additionally and/or alternatively include the at least one dispensing feature is selected from the group comprising nozzles, orifices, slits, weep holes, and the like.

A further embodiment of any of the foregoing embodiments may additionally and/or alternatively include the lubricant dispenser is integral with the bearing compartment housing.

A further embodiment of any of the foregoing embodiments may additionally and/or alternatively include the lubricant dispenser comprises a pressurizer in operative communication with the pitot tube, and the pressurizer in operative communication with a lubricant reservoir and dispensing features fluidly coupled to the lubricant reservoir.

A further embodiment of any of the foregoing embodiments may additionally and/or alternatively include the pitot tube comprises a pitot tube inlet located proximate a vehicle exterior, the pitot tube inlet configured to fluidly couple with a vehicle air stream flowing past the vehicle.

A further embodiment of any of the foregoing embodiments may additionally and/or alternatively include the lubrication system further comprising a flow control valve in operative communication with at least one of the pitot tube, a lubricant reservoir, tubing, a dispensing feature, and a pressurizer, the flow control valve configured to control a flow of the lubricant for deployment to the bearings.

In accordance with the present disclosure, there is provided a lubrication system comprising a gas turbine engine having a gas turbine engine housing, the gas turbine engine housing having a forward portion opposite an aft portion; a shaft mounted within the gas turbine engine housing, the shaft having an axis; a bearing compartment housing defining a bearing compartment housing interior having a bearing compartment housing interior surface and a bearing compartment housing exterior having a bearing compartment housing exterior surface; the shaft supported by bearings located within the bearing compartment housing; a lubricant dispenser in operative communication with the bearing compartment housing interior, the lubricant dispenser configured to dispense at least one lubricant, the at least one lubricant configured to be released onto the bearings; and a pitot tube fluidly coupled to the lubricant dispenser.

Particular embodiments further may include at least one, or a plurality of, the following optional features, alone or in combination with each other:

A further embodiment of any of the foregoing embodiments may additionally and/or alternatively include the lubricant dispenser comprises a lubricant reservoir in fluidly coupled with the pitot tube, the lubricant reservoir in fluidly coupled with the bearing compartment housing interior, the lubricant reservoir configured to contain the lubricant; and at least one dispensing feature fluidly coupled to the lubricant reservoir, wherein the dispensing feature is selected from the group comprising nozzles, orifices, slits, weep holes, and the like.

A further embodiment of any of the foregoing embodiments may additionally and/or alternatively include the lubrication system further comprising a controller in operative communication with any of the pitot tube, the flow control valve, the pressurizer, and the dispensing feature within the lubricant dispenser.

A further embodiment of any of the foregoing embodiments may additionally and/or alternatively include the lubricant dispenser comprises a pressurizer in operative communication with the pitot tube and a lubricant reservoir and dispensing features fluidly coupled to the lubricant reservoir, wherein the pitot tube is configured to pressurize the lubricant relative to the bearing housing compartment housing interior.

A further embodiment of any of the foregoing embodiments may additionally and/or alternatively include the pitot tube comprises a pitot tube inlet located proximate a vehicle exterior, the pitot tube inlet configured to fluidly couple with a vehicle air stream flowing past the vehicle.

A further embodiment of any of the foregoing embodiments may additionally and/or alternatively include the lubrication system further comprising a flow control valve in operative communication with at least one of the pitot tube, a lubricant reservoir, tubing, a dispensing feature, and a pressurizer, the flow control valve configured to control a flow of the lubricant for deployment to the bearings.

In accordance with the present disclosure, there is provided a process for delivering a lubricant in a lubrication system comprising mounting a shaft within a gas turbine engine housing of a gas turbine engine having a forward portion opposite an aft portion, the shaft having an axis extending from the forward portion to the aft portion; forming a bearing compartment housing within the gas turbine engine housing, the bearing compartment housing comprising an interior surface and an exterior surface, and the bearing compartment housing being configured to house at least one bearing configured to support the shaft; forming a lubricant dispenser in operative communication with the bearing compartment housing interior; wherein the lubricant dispenser is configured to dispense at least one lubricant, the at least one lubricant configured for release onto the at least one bearing; forming a pitot tube in operative communication with the lubricant dispenser; fluidly coupling a lubricant reservoir with the bearing compartment housing interior; the lubricant reservoir configured to contain the at least one lubricant; and fluidly coupling at least one dispensing feature to the lubricant reservoir, wherein the dispensing feature is selected from the group comprising nozzles, orifices, slits, weep holes, and the like.

Particular embodiments further may include at least one, or a plurality of, the following optional features, alone or in combination with each other:

A further embodiment of any of the foregoing embodiments may additionally and/or alternatively include the process of further comprising fluidly coupling the lubricant reservoir with the pitot tube.

A further embodiment of any of the foregoing embodiments may additionally and/or alternatively include the process further comprising a pressurizer in operative communication with a lubricant reservoir; fluidly coupling the pitot tube with the pressurizer; and configuring the pressurizer to pressurize the at least one lubricant relative to the bearing housing compartment housing interior.

A further embodiment of any of the foregoing embodiments may additionally and/or alternatively include the pitot tube comprises a pitot tube inlet located proximate a vehicle exterior, the pitot tube inlet configured to fluidly couple with a vehicle air stream flowing past the vehicle.

A further embodiment of any of the foregoing embodiments may additionally and/or alternatively include the process further comprising connecting a flow control valve in operative communication with at least one of the pitot tube, a lubricant reservoir, tubing, a dispensing feature, and a pressurizer; and configuring the flow control valve to control a flow of the at least one lubricant for deployment to the at least one bearing.

A further embodiment of any of the foregoing embodiments may additionally and/or alternatively include the process further comprising dispensing the at least one lubricant from the dispensing feature by use of fluid pressure forces from the pitot tube.

A further embodiment of any of the foregoing embodiments may additionally and/or alternatively include the process further comprising tailoring the dispensing feature to dispense the at least one lubricant at varying rates; and tailoring the dispensing feature to dispense the at least one lubricant at varying locations radially and/or axially along the interior surface relative to the at least one bearing.

Other details of the lubrication system are set forth in the following detailed description and the accompanying drawings wherein like reference numerals depict like elements.
Fig. 1 is a schematic representation of an exemplary lubrication system associated with a gas turbine system in a vehicle.
Fig. 2 is a schematic representation of the exemplary lubrication system of Fig. 1.
Fig. 3 is a schematic representation of an exemplary lubrication system with lubricant traps.
Fig. 4 is a schematic representation of another exemplary lubrication system with lubricant traps.
Fig. 5 is a schematic representation of an exemplary lubrication system with lubricant dispenser.
Fig. 6 is a schematic representation of an exemplary lubrication system with a pitot tube.

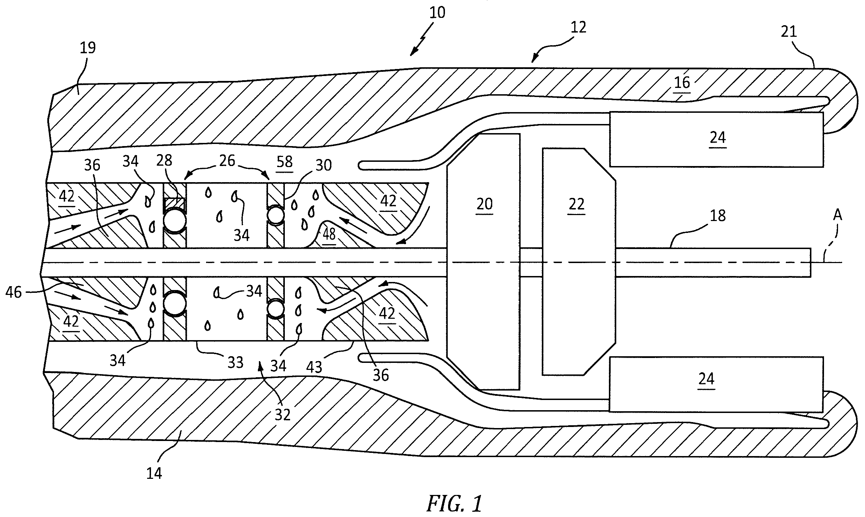

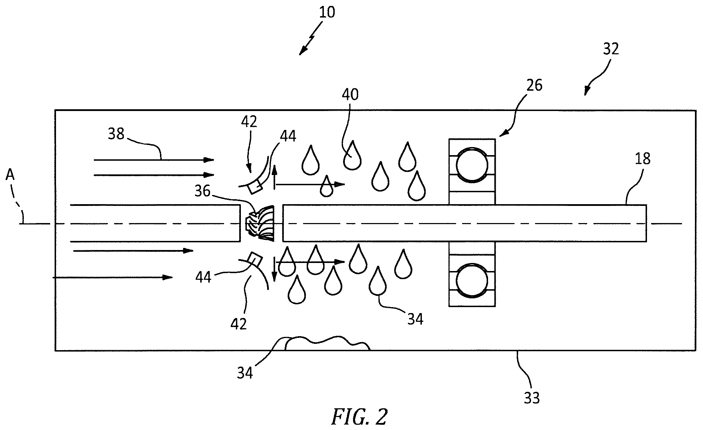

Referring now to Fig. 1 and Fig. 2, there is illustrated an exemplary lubrication system 10. The lubrication system 10 is associated with a gas turbine engine (turbo-jet) 12 installed in a vehicle 14, such as an unmanned or expendable vehicle. The gas turbine engine 12 includes a housing 16 supporting a shaft 18 aligned along an axis A. A forward portion 19 of the gas turbine engine 12 and an aft portion 21 of the gas turbine engine 12 are shown relative to the axis A. The gas turbine includes a compressor 20, a turbine 22 and combustor(s) 24. The compressor 20 and turbine 22 can be supported on the shaft 18.

The shaft 18 can be supported on bearings 26, such as first bearing 28 and second bearing 30. The first bearing 28 can be located axially forward of the second bearing 28 along the shaft 18. The bearings 26 can be located within a bearing compartment 32. The bearing compartment 32 includes a bearing compartment housing 33 that contains the bearings 26. The bearing compartment 32 can contain lubricant 34. The lubricant 34 can include liquid lubricant and lubricant mist, lubricant suspended in air as well as solid lubricant and semi-solid lubricant. The lubricant 34 can be an oil, a fuel, a grease, and the like. The lubricant 34 can have a variety of viscosities. The lubricant 34 can be temperature dependent and change viscosity responsive to the temperature.

The lubrication system 10 can include a persuader 36. The persuader 36 can be in operative communication (e.g., coupled to, formed with, and the like) with the shaft 18. The persuader 36 can be configured to be rotated by the shaft 18. The persuader 36 can be integral with the shaft 18. The persuader 36 can be mounted to the shaft 18. The persuader 36 can include a fan, an axial flow fan, a compressor, a mixed flow compressor, and the like.

The persuader 36 can be configured to propel the lubricant 34 in any phase or form, such as a liquid, a gas, a mixed phase fluid, and the like. The persuader 36 can be positioned to propel air 38 containing the lubricant 34. The lubricant 34 can be provided from a variety of sources and locations, such as, in the form of an oil mist, or grease dripping from a surface or such as a drip or mist from an oil tank. The persuader 36 can propel air 38, lubricant 34 and/or a mist 40 of lubricant 34/air 38. The persuader 36 can propel the lubricant 34 into contact with the bearings 26 to provide lubrication to the bearings 26. The persuader 36 can propel the lubricant 34 through the bearing compartment 32 from sources within the bearing compartment 32. The persuader 36 can propel the lubricant 34 from a source outside the bearing compartment 32 into the bearing compartment 32 and onto into contact with the bearings 26. The persuader 36 can be configured to maintain the lubricant 34/mist 40 to stay within the bearing compartment 32.

A volute 42 can encase the persuader 36. The volute 42 can be configured to direct the air 38 in proximity of the persuader 36 to propel the air 38/mist 40 onto the bearings 26. In an exemplary embodiment, the volute 42 can be an integral mixed flow compressor volute, formed as part of the bearing compartment housing 33. The volute 42 can be cast or machined into the bearing compartment housing 33. The volute 42 can be bolted/attached to the bearing compartment housing 33. In an exemplary embodiment, the bearing compartment housing 33 can be configured as a clam-shell design. The bearing compartment housing 33 can be removed with the volute 42. The volute 42 formed as a clam-shell design can be built around the persuader 36 (mixed flow compressor). The volute 42 can be built, and/or part of the housing 33 of the engine 12. In an exemplary embodiment, the volute 42 can be built by additive manufacturing (3D print) to better serve reducing part count.

As illustrated in FIG. 2, guide vanes 44 can be incorporated with the persuader 36 to influence the flow of the air 38/mist 40 lubricant 34 through the persuader 36. The guide vanes 44 can be formed integral with the volute 42. The guide vanes 44 can be configured to alter the fluid flow of the air 38/ mist 40 lubricant 34 through the bearing compartment 32.

The exemplary embodiment shown in Fig. 1 incorporates a first persuader 46 and a second persuader 48. The first persuader 46 is configured to propel the air 38/mist 40, lubricant 34 into the first bearing 28 in an aft direction. The second persuader 48 is configured to propel the air 38/mist 40, lubricant 34 into the second bearing 30 in a forward direction. The first persuader 46 and second persuader 48 maintain a lubricant 34 in contact with the bearings 26.

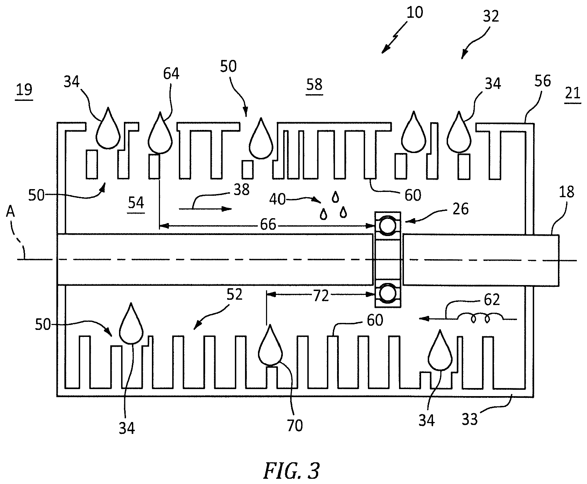

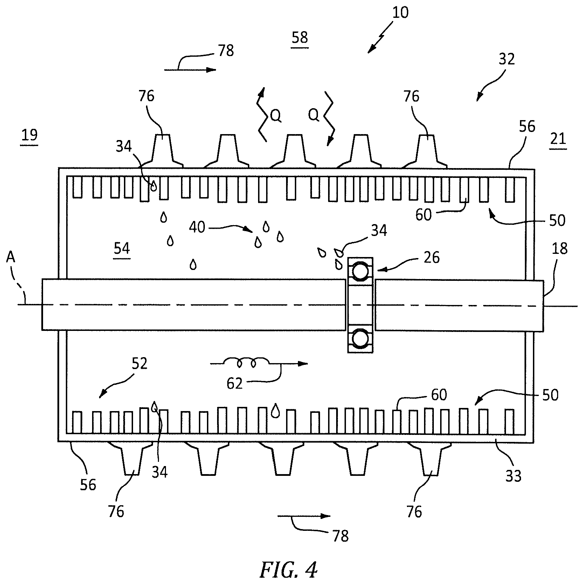

Referring also to Fig. 3 and Fig. 4, an exemplary lubrication system 10 with lubricant trap 50 is shown. The lubricant trap 50 can be formed in the bearing compartment housing 33. The bearing compartment housing 33 can include an interior surface 52 defining a bearing compartment housing interior 54. The bearing compartment housing 33 can include an exterior surface 56. The exterior surface 56 of the bearing compartment housing 33 can be exposed to cavity 58 within the gas turbine engine housing 16.

The bearing compartment housing interior surface 52 can include surface features 60. The surface features 60 can be shaped as a baffle, a gusset, a groove, a channel, a furrow, a ledge, a flange, a wall, a rib, and the like. The surface features 60 can be formed into patterns, such as a grid pattern, a honeycomb pattern, and the like. The surface feature 60 can be configured to capture, store, and then release the lubricant 34 responsive to predetermined conditions within the bearing compartment housing 33.

The lubricant 34 can be a paste or high viscosity material at standard room temperature conditions. The lubricant 34 can be configured to change viscosity responsive to changes in temperature, such as the operational temperatures of the gas turbine engine 16 proximate the bearing compartment 32. The lubricant 34 can change from a paste/solid phase/semi-solid phase to a liquid phase, a vapor, or a mixed phase responsive to a change in the temperature of the bearing compartment housing 33, such as the surface features 60 being heated.

For example, the lubricant 34 can be attached to the surface feature 60 within the lubricant trap 50 at a nominal room temperature T1 during a manufacturing step. For example, the lubricant trap 50 can be dipped into a liquid lubricant bath (not shown). The liquid lubricant 34 can be cooled to a room temperature, solidify fully or partially (e.g., semi solid) and lodge within the surface features 60 of the lubricant trap 50. The lubricant 34 can remain lodged within the lubricant trap 50 indefinitely during predetermined storage conditions. The gas turbine engine 12 can be assembled and kept in storage. Subsequently, after the gas turbine engine 16 has become operational, the bearing compartment housing 33 can become heated and an operational temperature T2 can be achieved. The lubricant 34 upon being exposed to the operational temperature T2 can become viscous and move out of the lubricant trap 50. The lubricant 34 can become suspended in the air 38. The lubricant 34 can become entrained in an airstream 62 within the interior 54, created by shaft 18 windage. The lubricant 34 can become mist 40 within the bearing compartment 32. The lubricant 34 can be entrained in the air 38 and propelled onto the bearing 26 as described above. The lubricant 34 can drip onto the bearing 26.

In an exemplary embodiment, a variety of lubricants 34 can be employed along the axial length of the bearing compartment interior surface 52 relative to the bearing 26. A first lubricant 64 can be employed and lodged within the lubricant trap 50 at a first axial distance 66 from the bearing 26. The first lubricant 64 can become viscous and flow at a first temperature. A second lubricant 70 can be lodged into the lubricant trap 50 at a second axial distance 72 from the bearing 26. The second lubricant 70 can become viscous and flow at a second temperature. The second temperature may be different from or the same as the first temperature.

During operation of the gas turbine engine 12, the interior surface 52 of the bearing compartment housing 33 can be heated to the first temperature. The first lubricant 64 can become more viscous and flow out of the lubricant trap 50 into the bearing compartment housing interior 54. The first lubricant 64 can become available to lubricate the bearing 26 at the first temperature.

Subsequently, during operation of the gas turbine engine 12, the interior surface 52 of the bearing compartment housing 33 can be heated to the second temperature. The second lubricant 70 can become more viscous and flow out of the lubricant trap 50 into the bearing compartment housing interior 54. The second lubricant 70 can become available to lubricate the bearing 26 at the second temperature. It is contemplated that a variety of lubricants 34 can be employed at various locations and become available for use in the bearing 26 responsive to gas turbine engine 12 operational conditions and temperature variation. The various lubricants 34 can be strategically placed to provide lubrication to the bearing 26 over time or under certain conditions without the need for a lubrication pump or plumbing system to deliver the lubricant to the bearing 26.

As seen in Fig. 4, the exemplary lubrication system 10 can include heat transfer fins 76 attached to the bearing compartment housing 33 proximate the exterior surface 56. Fins 76 are configured to transfer thermal energy Q to/from the bearing compartment housing 33.

In an exemplary embodiment, cavity 58 can have a temperature T that is hot relative to the fins 76 and the bearing compartment housing 33(e.g., hotter than). The thermal energy Q can be transferred from the airstream 78 within the cavity 58 to the fins 76. The fins 76 can transfer the thermal energy by conduction into the bearing compartment housing 33 and subsequently to the lubricant trap 50 to heat the lubricant 34. The lubricant 34 can flow, can be evaporated, and entrained within the air 38 of the interior 54. Lubricant 34 can flow as a liquid toward the bearing 26.

In an exemplary embodiment, cavity 58 can have a temperature T that is cold relative to the fins 76 and the bearing compartment housing 33(e.g., colder than). The thermal energy Q can be transferred to the airstream 78 within the cavity 58 from the fins 76. The fins 76 can transfer the thermal energy by conduction from the bearing compartment housing 33 and subsequently away from the lubricant trap 50 to cool the lubricant 34. The cooling of the bearing compartment housing 33 can also create condensate from warmed lubricant 34 suspended in the air 38 within the interior 54, such as mist 40. The cooled mist 40 can be condensed onto the interior surface 52 and become trapped within the lubrication trap 50.

The condensed lubricant 34 can be re-heated at another time for use to lubricate the bearing 26. The fins 76 can be employed to transport the lubricant 34 within the bearing compartment housing interior 54 to help lubricate the bearing 26.

The fins 76 can be formed integral with the bearing compartment housing 33. The fins 76 can be attached to the exterior surface 56 as separate components. The fins 76 can be configured with low aerodynamic drag properties. The fins 76 can be configured as static vanes which influence the airstream 78 and improve laminar flow and reduce flow vortices. The fins 76 can have an airfoil shape to influence the airstream 78.

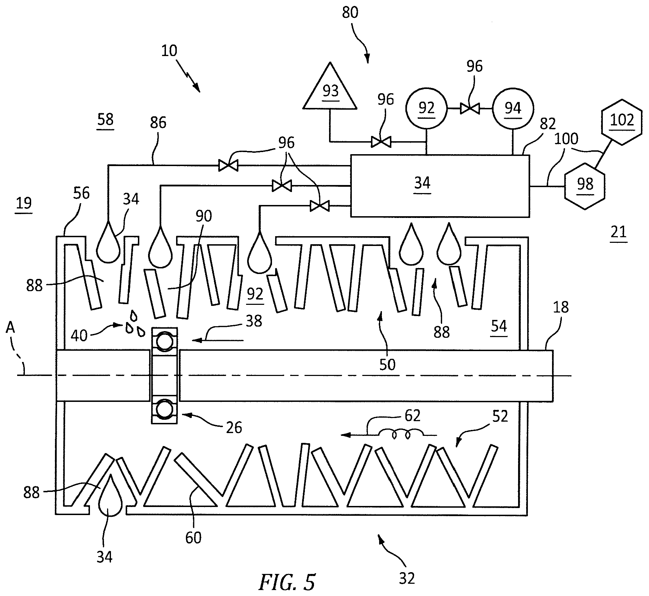

Referring also to Fig. 5 an exemplary lubrication system 10 is shown with a lubricant dispenser 80. The lubricant dispenser 80 is configured to store and dispense the lubricant 34 to the bearings 26 within the bearing compartment housing interior 54.

The lubricant dispenser 80 includes a lubricant reservoir or simply lubricant tank 82. The lubricant reservoir 82 is configured to store lubricant 34. The lubricant reservoir 82 can be a closed volume container with walls 84. The walls 84 can be rigid walls or flexible walls, such as a bladder. The lubricant reservoir 82 can be formed integral with the bearing compartment housing 33 or with other structures within the gas turbine engine 12.

The lubricant reservoir 82 can be located proximate to the bearing compartment 32. The lubricant reservoir 84 is shown located in the gas turbine engine housing cavity 58 adjacent to the bearing compartment housing 33.

The lubricant dispenser 80 can include tubing 86 or other passageways 86 that are configured to transport the lubricant 34 from the lubricant reservoir 84 to the bearing compartment housing interior 54 and ultimately the bearing 26. It is contemplated that passageways 86 can be formed integral with the bearing compartment housing 33.

The lubricant dispenser 80 can include dispensing features 88 configured to distribute the lubricant 34 from the passageways 86 into the bearing compartment housing interior 54. The dispensing features 88 can include nozzles, orifices, slits, weep holes, and the like. The dispensing features 88 can be formed integral with the bearing compartment housing 33. The dispensing features 88 can be formed to discharge the lubricant 34 proximate the interior surface 52. The dispensing features 88 can be configured to produce the mist 40 containing the air 38 and suspended lubricant 34. The dispensing features 88 can be configured to drip liquid phase lubricant 34 into the bearing compartment housing 33 to be entrained in the airstream 62 and propelled onto the bearing 26. The dispensing feature 88 can be located such that the lubricant 34 is delivered onto the bearing 26. In an exemplary embodiment, the dispensing features 88 can be tailored to dispense the lubricant 34 at varying rates. The dispensing features 88 can be tailored to dispense the lubricant 34 at varying locations radially or axially along the interior surface 52. For example, a first dispensing feature 90 can be configured to drip liquid lubricant 34 at a close proximity to the bearing 26, such that liquid lubricant 34 contacts the bearing 26 directly. A second dispensing feature 92 can be configured to dispense the lubricant 34 as a mist 40 at an axial or radial distance distally from the bearing 26, such that the mist 40 is propelled toward the bearing 26 and contacts the bearing 26. The dispensing features 88 can be configured to dispense varying quantities of lubricant 34 into the bearing compartment housing 33, responsive to time, temperature, and gas turbine engine 12 operational conditions.

The lubricant 34 can be delivered from the lubricant reservoir 82 by gravitational forces, mechanical momentum, centrifugal forces and/or by use of fluid pressure forces. The lubricant reservoir 82 can be fluidly coupled to a pressurizer 92. The pressurizer 92 can be configured as a bladder that contains compressed gas, a gas generator and/or start cartridge configured to generate an energized gas 94. The start cartridge can include a chemical mixture that reacts upon ignition to generate the energized gas 94. In exemplary embodiments, pressurizer 92 can include any device configured to produce the energized gas 94. The pressurizer 92 can provide the pressure necessary to transport the lubricant 34. In an alternate embodiment, the pressurizer 92 can be pressurized from a bleed air source 93 taken from the gas turbine engine 12, such as the compressor 20. The bleed air source 93 can feed the pressurizer 92 or be directly plumbed to the lubricant reservoir 82 or a combination of both. The lubricant 34 can be propelled through the tubing 86 to the dispensing feature 88. The dispensing feature 88 can dispense the lubricant 34 to be employed to lubricate the bearing 26.

Flow control valve(s) 96 can be in operative communication with the lubricant reservoir 82, tubing 86, dispensing feature 88, and/or pressurizer 92. The flow control valve(s) 96 can be configured to control the flow of the lubricant 34 for deployment to the bearing 26.

A controller/control system 98 can be in operative communication with any of the flow control valve(s) 96, the pressurizer 92, the dispensing feature 88 within the lubricant dispenser 80.

The controller/control system 98 may include hardware, firmware, and/or software components that are configured to perform the functions disclosed herein, including the functions of the exemplary lubrication system 10. While not specifically shown, the controller/control system 98 may include other computing devices (e.g., servers, mobile computing devices, etc.) and computer aided manufacturer (CAM) systems which may be in communication with each other and/or the control system 98 via a communication network 100 to perform one or more of the disclosed functions. The controller/control system 98 may include at least one processor 102 (e.g., a controller, microprocessor, microcontroller, digital signal processor, etc.), memory, and an input/output (I/O) subsystem. The controller/control system 98 may be embodied as any type of computing device e.g., a server, an enterprise computer system, a network of computers, a combination of computers and other electronic devices, or other electronic devices. Although not specifically shown, the I/O subsystem typically includes, for example, an I/O controller, a memory controller, and one or more I/O ports. The processor 102 and the I/O subsystem are communicatively coupled to the memory. The memory may be embodied as any type of computer memory device (e.g., volatile memory such as various forms of random-access memory).

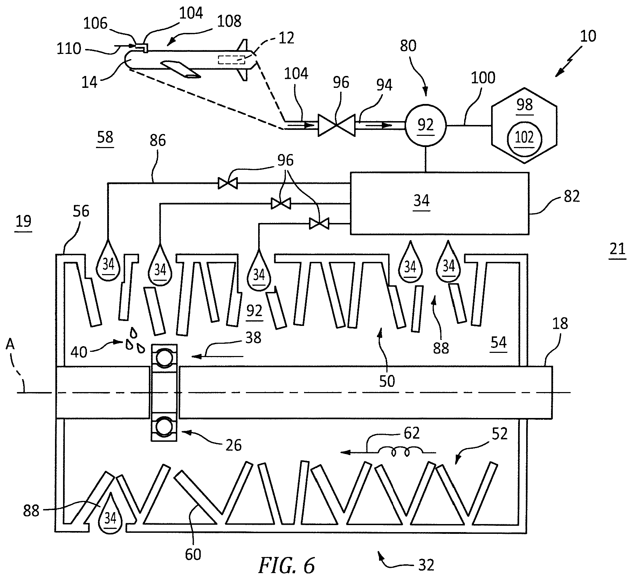

Referring also to Fig. 6, an exemplary lubrication system 10 with a pitot tube 104 is shown. The lubrication system 10 includes the lubricant dispenser 80 including the lubricant reservoir 82, tubing 86 and dispensing feature 88 and pressurizer 92. The lubricant dispenser 80 is configured to dispense the lubricant 34 into the bearing compartment housing interior 54 for lubrication of the bearing 26.

The pitot tube 104 is included with the lubrication system 10 to provide the fluid pressure forces to the pressurizer 92/lubricant reservoir 82. The pitot tube 104 can be configured as a NACA scoop, ram air inlet, and air intake ducts, converging to diverging nozzle and the like. The pitot tube 104 can be configured to increase the pressure of the air to dispense the lubricant 34.

The pitot tube 104 can be fluidly coupled to the pressurizer 92. In exemplary embodiments, the pitot tube 104 can be directly fluidly coupled with the lubricant reservoir 82.

The pitot tube 104 can be installed in the vehicle 14. The pitot tube 104 can include a pitot tube inlet 106 proximate a vehicle exterior 108. The pitot tube inlet 106 is positioned to point directly into a vehicle exterior air stream 110, as the vehicle 14 moves through the air. Since the pitot tube 104 contains a fluid (air), a pressure P can be generated. The moving (fluid) vehicle air stream 110 is brought to rest (stagnates) as there is no outlet from the pitot tube 104 to allow flow to continue. This pressure P is the stagnation pressure of the vehicle air stream 110 (fluid), also known as the total pressure or (particularly in aviation) the pitot pressure P. The pitot pressure P provides the needed fluid pressure forces to dispense the lubricant 34.

The flow control valve 96 can be in operative communication with the pitot tube 104 and control the operation of the pitot tube 104. The controller /control system 98 can be in operative communication with the pitot tube 104.

The lubricant dispenser 80 can utilize the pitot tube 104 to help dispense the lubricant 34 without the need for other devices or mechanisms needed, such as the bleed source 93.

A technical advantage of the disclosed lubrication system includes the elimination of a complex lubrication system.

Another technical advantage of the disclosed lubrication system includes weight reduction.

Another technical advantage of the disclosed lubrication system includes cost reduction.

Another technical advantage of the disclosed lubrication system includes improved efficiency of current engine systems.

Another technical advantage of the disclosed lubrication system includes fewer assembly pieces, simpler assembly.

Another technical advantage of the disclosed lubrication system includes elimination of on-board plumbing for oil delivery and return.

Another technical advantage of the disclosed lubrication system includes reduction of joining hardware for legacy lubrication systems, (less nuts and bolts for hardware attachment).

There has been provided a lubrication system. While the lubrication system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the scope of the appended claims.

## Claims

1. A lubrication system (10) for a gas turbine engine (12), comprising:
a bearing compartment housing defining a bearing compartment housing interior (54) having a bearing compartment housing interior surface (52) and a bearing compartment housing exterior having a bearing compartment housing exterior surface (56);
a shaft (18) supported by bearings (26) located within the bearing compartment housing (33), wherein the shaft (18) is mountable within a gas turbine engine housing, the shaft (18) having an axis (A);
a lubricant dispenser (80) in operative communication with the bearing compartment housing interior (54), the lubricant dispenser (80) configured to contain at least one lubricant, the at least one lubricant (34) configured to be released onto the bearings (24); and
a pitot tube (104) fluidly coupled to the lubricant dispenser (80).

2. The lubrication system according to claim 1, wherein the lubricant dispenser (80) comprises:
a lubricant reservoir (82) fluidly coupled with the pitot tube, the lubricant reservoir (82) fluidly coupled with the bearing compartment housing interior (54); and
at least one dispensing feature (88) fluidly coupled to the lubricant reservoir (82).

3. The lubrication system according to claim 2, wherein the at least one dispensing feature (88) is selected from the group comprising nozzles, orifices, slits, and weep holes.

4. The lubrication system according to any of claims 1 to 3, wherein the lubricant dispenser (80) is integral with the bearing compartment housing (33).

5. The lubrication system according to any of claims 1 to 4, wherein the lubricant dispenser (80) comprises a pressurizer (92) in operative communication with the pitot tube, and the pressurizer is in operative communication with a lubricant reservoir (82) and dispensing features (88) fluidly coupled to the lubricant reservoir (82).

6. The lubrication system according to any of claims 1 to 5, wherein the pitot tube (104) comprises a pitot tube inlet (106) located proximate a vehicle exterior (108), the pitot tube inlet (106) configured to fluidly couple with a vehicle air stream flowing past the vehicle.

7. The lubrication system according to any of claims 1 to 6, further comprising:
a flow control valve (96) in operative communication with at least one of the pitot tube (104), a lubricant reservoir (82), tubing (86), a dispensing feature (88), and a pressurizer (92), the flow control valve (96) configured to control a flow of the lubricant for deployment to the bearings (26).

8. The lubrication system according to any of claims 1 to 7, comprising:
a gas turbine engine (12) having a gas turbine engine housing (16), the gas turbine engine housing having a forward portion (19) opposite an aft portion (21);
wherein the shaft (18) is mounted within the gas turbine engine housing, the shaft having an axis (A).

9. The lubrication system according to any of claims 1 to 8, further comprising:
a controller in operative communication with any of the pitot tube, the flow control valve (96), the pressurizer (92), and the dispensing feature (88) within the lubricant dispenser (80).

10. A process for delivering a lubricant (34) in a lubrication system comprising:
mounting a shaft (18) within a gas turbine engine housing (16) of a gas turbine engine having a forward portion opposite an aft portion, the shaft (18) having an axis (A) extending from the forward portion to the aft portion;
forming a bearing compartment housing (33) within the gas turbine engine housing (16), the bearing compartment housing comprising an interior surface (52) and an exterior surface (56), and the bearing compartment housing (33) being configured to house at least one bearing configured to support the shaft (18);
forming a lubricant dispenser (80) in operative communication with the bearing compartment housing interior (54); wherein the lubricant dispenser is configured to dispense at least one lubricant, the at least one lubricant configured for release onto the at least one bearing;
forming a pitot tube (104) in operative communication with the lubricant dispenser;
fluidly coupling a lubricant reservoir (82) with the bearing compartment housing interior (54); the lubricant reservoir (82) configured to contain the at least one lubricant; and
fluidly coupling at least one dispensing feature (88) to the lubricant reservoir (82), wherein the dispensing feature (88) is selected from the group comprising nozzles, orifices, slits, and weep holes.

11. The process of claim 10, further comprising:
fluidly coupling the lubricant reservoir (82) with the pitot tube (104).

12. The process of claim 10 or 11, further comprising:
a pressurizer (96) in operative communication with a lubricant reservoir (82);
fluidly coupling the pitot tube (104) with the pressurizer (96); and
configuring the pressurizer (96) to pressurize the at least one lubricant relative to the bearing housing compartment housing interior.

13. The process of any of claims 10 to 12, wherein the pitot tube (104) comprises a pitot tube inlet (106) located proximate a vehicle exterior (108), the pitot tube inlet (106) configured to fluidly couple with a vehicle air stream (110) flowing past the vehicle.

14. The process of any of claims 10 to 13, further comprising:
connecting a flow control valve (96) in operative communication with at least one of the pitot tube (104), a lubricant reservoir (82), tubing (86), a dispensing feature (88), and a pressurizer (92); and
configuring the flow control valve (96) to control a flow of the at least one lubricant for deployment to the at least one bearing (26).

15. The process of any of claims 10 to 14, further comprising:
dispensing the at least one lubricant (34) from the dispensing feature (88) by use of fluid pressure forces from the pitot tube (104); and/or
further comprising:
tailoring the dispensing feature (88) to dispense the at least one lubricant (34) at varying rates; and
tailoring the dispensing feature (88) to dispense the at least one lubricant (34) at varying locations radially and/or axially along the interior surface (52) relative to the at least one bearing.

## Patentansprüche

1. Schmiersystem (10) für ein Gasturbinentriebwerk (12), umfassend:
ein Lagerkammergehäuse, definierend eine Lagerkammergehäuseinnenseite (54), aufweisend eine Lagerkammergehäuseinnenseitenoberfläche (52), und eine Lagerkammergehäuseaußenseite, aufweisend eine Lagerkammergehäuseaußenseitenoberfläche (56);
eine Welle (18), die durch Lager (26) getragen wird, die sich innerhalb des Lagerkammergehäuses (33) befinden, wobei die Welle (18) innerhalb eines Gasturbinentriebwerksgehäuses montierbar ist, wobei die Welle (18) eine Achse (A) aufweist;
einen Schmiermittelspender (80) in operativer Kommunikation mit der Lagerkammergehäuseinnenseite (54), wobei der Schmiermittelspender (80) konfiguriert ist, um mindestens ein Schmiermittel zu enthalten, wobei das mindestens eine Schmiermittel (34) konfiguriert ist, um auf die Lager (24) abgegeben zu werden; und
ein Pitotrohr (104), das fluidisch mit dem Schmiermittelspender (80) gekoppelt ist.

2. Schmiersystem nach Anspruch 1, wobei der Schmiermittelspender (80) Folgendes umfasst:
einen Schmiermittelbehälter (82), der fluidisch mit dem Pitotrohr gekoppelt ist, wobei der Schmiermittelbehälter (82) fluidisch mit der Lagerkammergehäuseinnenseite (54) gekoppelt ist; und
mindestens ein Spendemerkmal (88), das fluidisch mit dem Schmiermittelbehälter (82) gekoppelt ist.

3. Schmiersystem nach Anspruch 2, wobei das mindestens eine Spendemerkmal (88) aus der Gruppe, umfassend Düsen, Öffnungen, Schlitze und Entlüftungslöcher, ausgewählt ist.

4. Schmiersystem nach einem der Ansprüche 1 bis 3, wobei der Schmiermittelspender (80) einstückig mit dem Lagerkammergehäuse (33) ausgebildet ist.

5. Schmiersystem nach einem der Ansprüche 1 bis 4, wobei der Schmiermittelspender (80) einen Druckhalter (92) in operativer Kommunikation mit dem Pitotrohr umfasst und der Druckhalter in operativer Kommunikation mit einem Schmiermittelbehälter (82) und Spendemerkmalen (88), die fluidisch mit dem Schmiermittelbehälter (82) gekoppelt sind, ist.

6. Schmiersystem nach einem der Ansprüche 1 bis 5, wobei das Pitotrohr (104) einen Pitotrohreinlass (106) umfasst, der sich in der Nähe einer Fahrzeugaußenseite (108) befindet, wobei der Pitotrohreinlass (106) konfiguriert ist, um sich fluidisch mit einem an dem Fahrzeug vorbeiströmenden Fahrzeugluftstrom zu koppeln.

7. Schmiersystem nach einem der Ansprüche 1 bis 6, ferner umfassend:
ein Durchflusssteuerventil (96) in operativer Kommunikation mit mindestens einem von dem Pitotrohr (104), einem Schmiermittelbehälter (82), einer Rohrleitung (86), einem Spendemerkmal (88) und einem Druckhalter (92), wobei das Durchflusssteuerventil (96) konfiguriert ist, um einen Durchfluss des Schmiermittels zur Zuleitung zu den Lagern (26) zu steuern.

8. Schmiersystem nach einem der Ansprüche 1 bis 7, umfassend:
ein Gasturbinentriebwerk (12), aufweisend ein Gasturbinentriebwerksgehäuse (16), wobei das Gasturbinentriebwerksgehäuse einen vorderen Abschnitt (19), der einem hinteren Abschnitt (21) gegenüberliegt, aufweist;
wobei die Welle (18) innerhalb des Gasturbinentriebwerksgehäuses montiert ist, wobei die Welle eine Achse (A) aufweist.

9. Schmiersystem nach einem der Ansprüche 1 bis 8, ferner umfassend:
eine Steuerung in operativer Kommunikation mit einem beliebigen des Pitotrohrs, des Durchflusssteuerventils (96), des Druckhalters (92) und des Spendemerkmals (88) innerhalb des Schmiermittelspenders (80).

10. Verfahren zur Zufuhr eines Schmiermittels (34) in ein Schmiersystem, umfassend:
Montieren einer Welle (18) innerhalb eines Gasturbinentriebwerksgehäuses (16) eines Gasturbinentriebwerks, aufweisend einen vorderen Abschnitt, der einem hinteren Abschnitt gegenüberliegt, wobei die Welle (18) eine Achse (A) aufweist, die sich von dem vorderen Abschnitt zu dem hinteren Abschnitt erstreckt;
Ausbilden eines Lagerkammergehäuses (33) innerhalb des Gasturbinentriebwerksgehäuses (16), wobei das Lagerkammergehäuse eine Innenseitenoberfläche (52) und eine Außenseitenoberfläche (56) umfasst und das Lagerkammergehäuse (33) konfiguriert ist, um mindestens ein Lager aufzunehmen, das konfiguriert ist, um die Welle (18) zu tragen;
Ausbilden eines Schmiermittelspenders (80) in operativer Kommunikation mit der Lagerkammergehäuseinnenseite (54), wobei der Schmiermittelspender konfiguriert ist, um mindestens ein Schmiermittel zu spenden, wobei das mindestens eine Schmiermittel zur Abgabe auf das mindestens eine Lager konfiguriert ist;
Ausbilden eines Pitotrohrs (104) in operativer Kommunikation mit dem Schmiermittelspender;
fluidisches Koppeln eines Schmiermittelbehälters (82) mit der Lagerkammergehäuseinnenseite (54); wobei der Schmiermittelbehälter (82) konfiguriert ist, um das mindestens eine Schmiermittel zu enthalten; und
fluidisches Koppeln mindestens eines Spendemerkmals (88) mit dem Schmiermittelbehälter (82), wobei das Spendemerkmal (88) aus der Gruppe, umfassend Düsen, Öffnungen, Schlitze und Entlüftungslöcher, ausgewählt ist.

11. Verfahren nach Anspruch 10, ferner umfassend:
fluidisches Koppeln des Schmiermittelbehälters (82) mit dem Pitotrohr (104).

12. Verfahren nach Anspruch 10 oder 11, ferner umfassend:
einen Druckhalter (96) in operativer Kommunikation mit einem Schmiermittelbehälter (82);
fluidisches Koppeln des Pitotrohrs (104) mit dem Druckhalter (96); und
Konfigurieren des Druckhalters (96) zur Druckbeaufschlagung des mindestens einen Schmiermittels relativ zu der Lagergehäusekammergehäuseinnenseite.

13. Verfahren nach einem der Ansprüche 10 bis 12, wobei das Pitotrohr (104) einen Pitotrohreinlass (106) umfasst, der sich in der Nähe einer Fahrzeugaußenseite (108) befindet, wobei der Pitotrohreinlass (106) konfiguriert ist, um sich fluidisch mit einem an dem Fahrzeug vorbeiströmenden Fahrzeugluftstrom (110) zu koppeln.

14. Verfahren nach einem der Ansprüche 10 bis 13, ferner umfassend:
Verbinden eines Durchflusssteuerventils (96) in operativer Kommunikation mit mindestens einem von dem Pitotrohr (104), einem Schmiermittelbehälter (82), einer Rohrleitung (86), einem Spendemerkmal (88) und einem Druckhalter (92), und
Konfigurieren des Durchflusssteuerventils (96) zum Steuern eines Durchflusses des mindestens einen Schmiermittels zur Zufuhr zu dem mindestens einen Lager (26).

15. Verfahren nach einem der Ansprüche 10 bis 14, ferner umfassend:
Spenden des mindestens einen Schmiermittels (34) aus dem Spendemerkmal (88) durch Verwendung von Fluiddruckkräften aus dem Pitotrohr (104); und/oder
ferner umfassend:
Anpassen des Spendemerkmals (88) zum Spenden des mindestens einen Schmiermittels (34) bei variierenden Raten; und
Anpassen des Spendemerkmals (88) zum Spenden des mindestens einen Schmiermittels (34) an variierenden Stellen radial und/oder axial entlang der Innenseitenoberfläche (52) relativ zu dem mindestens einen Lager.

## Revendications

1. Système de lubrification (10) pour un moteur à turbine à gaz (12), comprenant :
un carter de compartiment de palier délimitant un intérieur de carter de compartiment de palier (54) ayant une surface intérieure de carter de compartiment de palier (52) et un extérieur de carter de compartiment de palier ayant une surface extérieure de carter de compartiment de palier (56) ;
un arbre (18) supporté par des paliers (26) situé au sein du carter de compartiment de palier (33), dans lequel l'arbre (18) peut être monté dans un carter de moteur à turbine à gaz, l'arbre (18) ayant un axe (A) ;
un distributeur de lubrifiant (80) en communication fonctionnelle avec l'intérieur de carter de compartiment de palier (54), le distributeur de lubrifiant (80) étant configuré pour contenir au moins un lubrifiant, l'au moins un lubrifiant (34) étant configuré pour être libéré sur les paliers (24) ; et
un tube de Pitot (104) accouplé de manière fluidique au distributeur de lubrifiant (80).

2. Système de lubrification selon la revendication 1, dans lequel le distributeur de lubrifiant (80) comprend :
un réservoir de lubrifiant (82) accouplé de manière fluidique au tube de Pitot, le réservoir de lubrifiant (82) étant accouplé de manière fluidique à l'intérieur de carter de compartiment de palier (54) ; et
au moins un élément de distribution (88) accouplé de manière fluidique au réservoir de lubrifiant (82).

3. Système de lubrification selon la revendication 2, dans lequel l'au moins un élément de distribution (88) est choisi dans le groupe constitué par des buses, des orifices, des fentes et des orifices d'évacuation.

4. Système de lubrification selon l'une quelconque des revendications 1 à 3, dans lequel le distributeur de lubrifiant (80) est intégré au carter de compartiment de palier (33).

5. Système de lubrification selon l'une quelconque des revendications 1 à 4, dans lequel le distributeur de lubrifiant (80) comprend un pressuriseur (92) en communication fonctionnelle avec le tube de Pitot, et le pressuriseur est en communication fonctionnelle avec un réservoir de lubrifiant (82) et des éléments de distribution (88) accouplés de manière fluidique au réservoir de lubrifiant (82).

6. Système de lubrification selon l'une quelconque des revendications 1 à 5, dans lequel le tube de Pitot (104) comprend une entrée de tube de Pitot (106) située à proximité d'un extérieur de véhicule (108), l'entrée de tube de Pitot (106) étant configurée pour être accouplée de manière fluidique avec un courant d'air de véhicule s'écoulant le long du véhicule.

7. Système de lubrification selon l'une quelconque des revendications 1 à 6, comprenant en outre :
une vanne de régulation de débit (96) en communication fonctionnelle avec au moins l'un parmi le tube de Pitot (104), un réservoir de lubrifiant (82), une tubulure (86), un élément de distribution (88) et un pressuriseur (92), la vanne de régulation de débit (96) étant configurée pour réguler un débit du lubrifiant destiné à être déployé sur les paliers (26).

8. Système de lubrification selon l'une quelconque des revendications 1 à 7, comprenant :
un moteur à turbine à gaz (12) ayant un carter de moteur à turbine à gaz (16), le carter de moteur à turbine à gaz ayant une partie avant (19) en regard d'une partie arrière (21) ;
dans lequel l'arbre (18) est monté au sein du carter de moteur à turbine à gaz, l'arbre ayant un axe (A).

9. Système de lubrification selon l'une quelconque des revendications 1 à 8, comprenant en outre :
un dispositif de régulation en communication fonctionnelle avec l'un quelconque parmi le tube de Pitot, la vanne de régulation de débit (96), le pressuriseur (92) et l'élément de distribution (88) au sein du distributeur de lubrifiant (80).

10. Procédé de distribution d'un lubrifiant (34) dans un système de lubrification comprenant :
le montage d'un arbre (18) au sein d'un carter de moteur à turbine à gaz (16) d'un moteur à turbine à gaz ayant une partie avant en regard d'une partie arrière, l'arbre (18) ayant un axe (A) s'étendant de la partie avant à la partie arrière ;
la formation d'un carter de compartiment de palier (33) au sein du carter de moteur à turbine à gaz (16), le carter de compartiment de palier comprenant une surface intérieure (52) et une surface extérieure (56), et le carter de compartiment de palier (33) étant configuré pour loger au moins un palier configuré pour supporter l'arbre (18) ;
la formation d'un distributeur de lubrifiant (80) en communication fonctionnelle avec l'intérieur de carter de compartiment de palier (54) ; dans lequel le distributeur de lubrifiant est configuré pour distribuer au moins un lubrifiant, l'au moins un lubrifiant étant configuré pour être libéré sur l'au moins un palier ;
la formation d'un tube de Pitot (104) en communication fonctionnelle avec le distributeur de lubrifiant ;
l'accouplement de manière fluidique d'un réservoir de lubrifiant (82) avec l'intérieur de carter de compartiment de palier (54) ; le réservoir de lubrifiant (82) étant configuré pour contenir l'au moins un lubrifiant ; et
l'accouplement de manière fluidique d'au moins un élément de distribution (88) avec le réservoir de lubrifiant (82), dans lequel l'élément de distribution (88) est choisi dans le groupe constitué par des buses, des orifices, des fentes et des orifices d'évacuation.

11. Procédé selon la revendication 10, comprenant en outre :
l'accouplement de manière fluidique du réservoir de lubrifiant (82) avec le tube de Pitot (104).

12. Procédé selon la revendication 10 ou 11, comprenant en outre :
un pressuriseur (96) en communication fonctionnelle avec un réservoir de lubrifiant (82) ;
l'accouplement de manière fluidique du tube de Pitot (104) avec le pressuriseur (96) ; et
la configuration du pressuriseur (96) pour pressuriser l'au moins un lubrifiant par rapport à l'intérieur de carter de compartiment de palier.

13. Procédé selon l'une quelconque des revendications 10 à 12, dans lequel le tube de Pitot (104) comprend une entrée de tube de Pitot (106) située à proximité d'un extérieur de véhicule (108), l'entrée de tube de Pitot (106) étant configurée pour être accouplée de manière fluidique avec un courant d'air de véhicule (110) s'écoulant le long du véhicule.

14. Procédé selon l'une quelconque des revendications 10 à 13, comprenant en outre :
la liaison d'une vanne de régulation de débit (96) en communication fonctionnelle avec au moins l'un parmi le tube de Pitot (104), un réservoir de lubrifiant (82), une tubulure (86), un élément de distribution (88) et un pressuriseur (92) ; et
la configuration de la vanne de régulation de débit (96) pour réguler un débit de l'au moins un lubrifiant destiné à être déployé sur l'au moins un palier (26).

15. Procédé selon l'une quelconque des revendications 10 à 14, comprenant en outre :
la distribution de l'au moins un lubrifiant (34) à partir de l'élément de distribution (88) en utilisant les forces de pression de fluide provenant du tube de Pitot (104) ; et/ou
comprenant en outre :
l'adaptation de l'élément de distribution (88) pour la distribution de l'au moins un lubrifiant (34) à des débits variables ; et
l'adaptation de l'élément de distribution (88) pour la distribution de l'au moins un lubrifiant (34) à des emplacements variables radialement et/ou axialement le long de la surface intérieure (52) par rapport à l'au moins un palier.
